# EUROPEAN PATENT SPECIFICATION

(11) **EP 3 083 381 B1**
(45) Date of publication and mention of the grant of the patent: **12.12.2018**
(21) Application number: 14830681.4
(22) Date of filing: 16.12.2014
(51) Int. Cl.: B62J 1/16, B62J 1/20, A47G 9/06

(54) **BLANKET FOR A BIKE CHILD SEAT AND RELATED PRODUCTION METHOD**
DECKE FÜR EINEN FAHRRADKINDERSITZ UND ZUGEHÖRIGES HERSTELLUNGSVERFAHREN
COUVERTURE POUR UN SIÈGE D'ENFANT DE BICYCLETTE ET PROCÉDÉ DE PRODUCTION ASSOCIÉ

(30) Priority: 17.12.2013 IT TO20131029
(43) Date of publication of application: 26.10.2016
(73) Proprietor: Berio, Ilaria, 10143 Torino (IT)
(72) Inventor: Berio, Ilaria, 10143 Torino (IT)
(74) Representative: Meindl, Tassilo
(86) International application number: PCT/IB2014/066974
(87) International publication number: WO 2015/092683

(56) References cited:
- EP-A1- 2 540 599
- EP-A2- 1 099 619
- JP-A- 2005 290 653
- US-A- 5 243 724
- US-A1- 2008 148 480
- US-A1- 2008 229 499

## Description

### Field of the invention

The present invention regards a child-seat accessory for a bicycle.

The present invention has been developed in particular for providing a blanket that protects the child from cold, wind, and rain.

### Description of the prior art

Multifunctional blankets are known that can be used, for example, for protecting a child from cold.

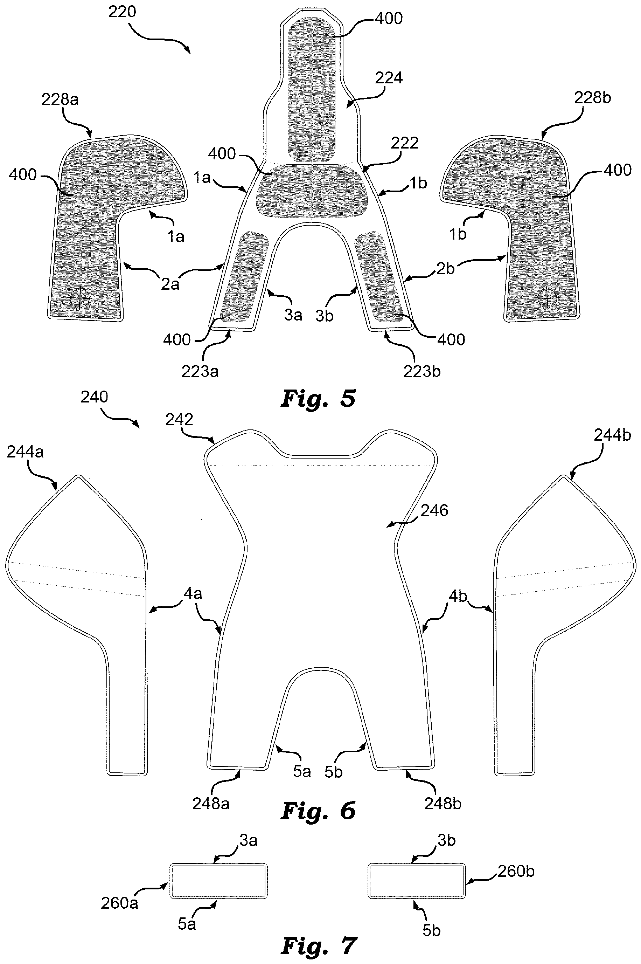

For instance, the document No. JP2005290653 describes such a multifunctional blanket, which comprises a plurality of openings that allow the blanket to be used for various purposes. For instance, in Figure 6(b) of the above document it is shown how the blanket can also be used as accessory for a bicycle child seat.

The documents US2008/229499A1, EP1099619A2, US5243724A, US2008/148480 may also be of interest for the present invention. The closest prior art according to the preamble of claim 1 and 11 is represented by the document EP2540599A1.

### Object and summary of the invention

The inventor has found that the blanket described previously presents numerous drawbacks. For instance, the aforesaid blanket is not easy to fasten to the child seat of the bicycle, and also closing of the blanket is complicated and fastening of the child to the seat is not guaranteed.

The object of the present invention is to overcome one or more of the disadvantages outlined above.

According to the present invention, the aforesaid object is achieved via a blanket for a bicycle child seat having the characteristics forming the subject of Claim 1. The invention moreover regards a corresponding production method as covered by Claim 11.

The claims form an integral part of the technical teaching provided herein in relation to the invention.

In the claimed embodiment, the blanket for a bicycle child seat according to the present description comprises a base portion and a covering portion.

In the claimed embodiment, the base portion comprises a first portion configured to be rested on the sitting surface of the child seat and a second portion configured to be rested against the backrest of the child seat. For instance, the first portion has a trapezoidal shape and the second portion may be tongue-shaped.

In various embodiments, the second portion is configured to leave free the areas of fixing of possible safety belts to the backrest of the child seat, and the first portion comprises an aperture in a position corresponding to possible fastening means of the child seat that have the purpose of fixing the safety belts to the sitting surface of the child seat. For instance, in various embodiments, the second portion has a width that narrows in the end area in such a way that the width of the end area of the second portion is smaller than the distance between the points of fixing of the safety belts to the backrest of the child seat, and/or the second portion has a length that is smaller than the distance between the sitting surface of the child seat and the aforesaid fixing points.

In the claimed embodiment, the covering portion is configured to be movable between an open position in which a child can be seated on the base portion and a closed position in which the covering portion covers the child at least partially. For instance, the covering portion may be held in the closed position via appropriate blocking means, such as, for example, two belts that can be connected together behind the backrest of the child seat. In various embodiments, the covering portion has a width that is greater than the width of the base portion.

In the claimed embodiment, the blanket comprises fastening means configured to fix the base portion to the child seat. For instance, in various embodiments the aforesaid fastening means comprise at least one first belt connected to the first portion, at least one second belt connected to the second portion, and fastening means configured to connect the first belt to the second belt.

In various embodiments, the blanket comprises portions that are configured to form two tubes when the covering portion is in the closed position.

In various embodiments, the base portion further comprises lateral portions configured to be rested against possible armrests of the child seat.

In various embodiments, the blanket also comprises means for adjusting the height of the covering portion, a covering for protection against rain, a rain hood for the child, and/or an eyelet for fastening the blanket to the bicycle.

Consequently, the blanket is adaptable and easy to use. Furthermore, the blanket does not have to be removed each time but can also remain always on the child seat. In fact, thanks to the eyelet the blanket can be fixed together with the bicycle and, thanks to the covering, the inside of the blanket and the child seat can be protected from rain.

### Brief description of the drawings

The present invention will now be described in detail with reference to the attached drawings, which are provided purely by way of non-limiting example and in which:
- Figure 1 shows an example of a child seat mounted on a bicycle;
- Figure 2 shows an embodiment of a blanket for a bicycle child seat according to the present description;
- Figures 3, 4a, and 4b show an embodiment for fastening the blanket to a child seat;
- Figures 5 to 8c show an embodiment of production of a blanket according to the present description;
- Figures 9a to 9d show an embodiment of use of the blanket;
- Figures 10a and 10b show an embodiment of a blanket that can be used with children of different heights;
- Figures 11a to 11d show an embodiment of a blanket that comprises a covering for protection against rain;
- Figure 12 shows an embodiment of a blanket that comprises an eyelet for the safety chains of the bicycle; and
- Figures 13a to 13c show an embodiment of a blanket that comprises a rain hood for the child.

### Detailed description of embodiments

Illustrated in the ensuing description are various specific details aimed at providing an in-depth understanding of the embodiments. The embodiments may be obtained without one or more of the specific details, or with other methods, components, materials, etc. In other cases, known structures, materials, or operations are not illustrated or described in detail so that various aspects of the embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in various points of the present description do not necessarily refer to one and the same embodiment. Furthermore, particular conformations, structures, or characteristics may be combined in any adequate way in one or more embodiments.

The references used herein are provided merely for convenience and hence do not define the sphere of protection or the scope of the embodiments.

As mentioned previously, the present description relates to a blanket for a bicycle child seat.

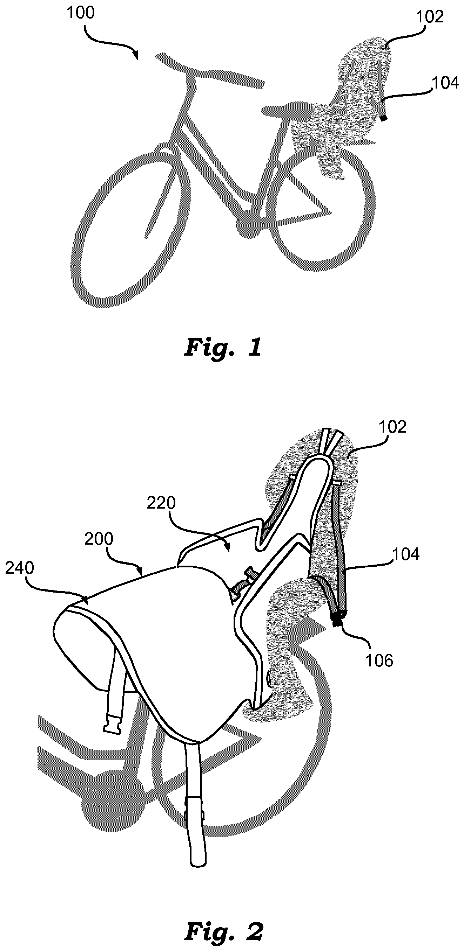

Figure 1 illustrates a typical bicycle 100, where a child seat 102 is fastened to the bicycle 100 in a way in itself known.

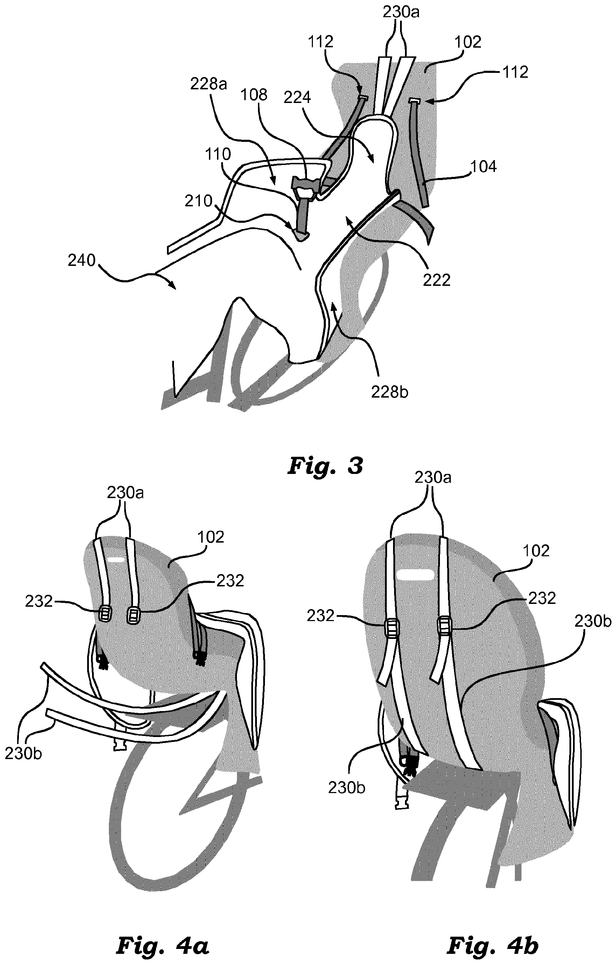

As may be seen, for example in Figures 2 and 3, typically such a child seat 102 comprises one or more safety straps or belts 104, or other fastening means, which allow the child to be fastened to the child seat 102. For instance, typically two straps 104 are used that pass over the shoulders of the child. Typically, fixed to each of the straps 104 is a hook 106 that is inserted in a buckle 108 that is positioned between the legs of the child. Normally, the aforesaid buckle 108 is fixed to the sitting surface of the child seat 102 via a strap 110. Such a type of fixing is well known, which renders any detailed description herein superfluous. The person skilled in the art will appreciate also that the variants of the buckle are very many indeed; for example, some are made of plastic without any strap, or in other child seats the buckle between the legs is not present and the straps 104 that pass over the head of the child are inserted in a closing mechanism provided directly in the structure of the child seat 102 at the height of the crutch.

As is illustrated in Figure 2, the blanket 200 of the present description comprises a base portion 220, which is fixed to the child seat 102, and a covering portion 240 that subsequently has the function of covering the child.

Figure 3 shows an embodiment in which the first portion 220 comprises a portion 222 that rests on the sitting surface of the child seat 102 and a portion 224 that covers at least partially the backrest of the child seat 102.

In the embodiment considered, the portion 222 may comprise an opening or slot 210 that allows passage of the buckle 108 of the child seat 102.

Instead, the portion 224 that is to cover at least partially the backrest of the child seat 102 has a shape that leaves the belts 104 of the seat 102 free. In general, this could be obtained via openings also in the portion 224 that are arranged in positions 112 for fixing the straps 104 to the child seat 102. However, the inventor has noted that the positions 112 for fixing the straps 104 vary among the various manufacturers of child seats. Furthermore, the aforesaid solution complicates application of the blanket 200 to the child seat 102 because the straps 104 have to pass through the aforesaid openings in the blanket 200.

For this reason, in a currently preferred embodiment, the portion 224 does not cover the backrest of the child seat 102 entirely and leaves the areas of fixing 112 of the straps 104 free. For instance, as illustrated in Figure 3, this can be obtained via a portion 224 that has at least one between:
a) a width that narrows in the end area in such a way that the width of the end area is smaller than the distance between the straps 104 in the area 112; and/or
b) a length that is smaller than the height of the area of fixing 112.

As mentioned previously, the portion 220 (including the part 222 that rests on the sitting surface and the part 224 that rests on the backrest) is configured for being fixed to the child seat 102.

For instance, in the embodiment considered, the blanket 200 comprises at least one strap for fixing the base portion 220 to the child seat 102.

For instance, Figures 4a and 4b show an embodiment where the blanket 200 comprises two straps 230a that are fixed to the terminal area of the portion 224, for example to the end of the tongue shape of the portion 224, and two straps 230b that are fixed to the portion 222, preferably at the height of the crutch where the opening or slot 210 is present for passage of the buckle 108 of the safety belt 104 of the child seat 102. Consequently, the aforesaid straps 230a and 230b enable fastening of the blanket 200 to the child seat 102, irrespective of the different types of safety belts 104 proper to the various models of child seats for bicycles.

Consequently, by connecting the straps 230a and 230b through appropriate fastening means 232, the base portion 220 can be removably fixed to the child seat 102.

In an embodiment, the portion 222 that is to rest on the sitting surface and the portion 224 that is to rest against the backrest have areas with increased stiffness. For instance, this can be obtained via a thicker fabric and/or inserts, for example inserts made of a plastic material, leather, and/or regenerated leather.

In an embodiment, the portion 220 further comprises two lateral protections 228a and 228b that rest laterally against possible armrests of the child seat 102. For instance, in the embodiment considered, the aforesaid lateral portions 228a and 228b are fixed to the portion 222.

For instance, Figure 5 shows a possible embodiment of the base portion 220 of the blanket 200.

In the embodiment considered, the part 220 comprises a substantially trapezoidal portion that represents the portion 222 that is to rest on the sitting surface of the child seat. Formed at the top part of the trapezium 222 is the portion 224 that is to rest against the backrest of the child seat 102. For instance, in the embodiment considered, the aforesaid part narrows in the end area and is substantially tongue-shaped.

In the embodiment considered, the part 220 further comprises substantially rectangular portions 223a and 223b that extend from the bottom part of the trapezium 222. The aforesaid portions 223a and 223b may be useful for the legs of the child. In fact, typically the leg rests of a child seat for a bicycle are separated to allow for passage of the wheel and/or the saddle of the bicycle.

Finally, illustrated in Figure 5 are two further L-shaped pieces that represent the lateral portions 228a and 228b. In particular, in the embodiment considered, each lateral portion 228a and 228b comprises a first stretch, typically shorter, with a length equal to the length of the side of the trapezium 222 and a second stretch, typically longer, with a length equal to the length of the rectangular portions 223a and 223b for the legs of the child.

In the embodiment considered, the first side piece 228a is fixed to the part 220 by fixing the internal edge of the first stretch to the external edge of the portion 223a. For instance, this can be obtained by sewing along a line 2a represented both for the part 223a and for the part 228a. The first side piece 228a is moreover fixed to the part 220 by fixing the internal edge of the second stretch to the external edge of the trapezoidal portion 222. For instance, this can be obtained by sewing along a line 1a represented both for the part 228a and for the part 222.

In the embodiment considered, the second side piece 228b is fixed in a similar way, for example by sewing along a line 2b represented both for the part 223b and for the part 228b and sewing along a line 1b represented both for the part 228b and for the part 222.

For this reason, thanks to the L-shaped profile of the side pieces 228a and 228b, the portions 223a and 223b are bent substantially at 90° with respect to the trapezoidal portion 222, in this way following the leg rests of a typical child seat 102.

In one embodiment, the parts 220, 228a and/or 228b have at least partially an increased stiffness. For instance, in the embodiment considered, the part 220 comprises four inserts 400 or areas with fabric that are stiffer and/or thicker, which are arranged in positions corresponding to the portions 222, 224, 223a and 223b. Consequently, whereas each of these portions 222, 224, 223a and 223b is substantially stiff, the areas of connection between the portions 222, 224, 223a and 223b remain flexible and foldable. Instead, in one embodiment, the portions 228a and 228b are substantially stiff and have, for example, inserts 400 that have substantially the same shape as the portions 228a and 228b.

As mentioned previously, the blanket 200 further comprises a portion 240 that is to cover the child.

In general, the covering portion 240 could be made of a single piece. Instead, Figure 6 shows a possible embodiment where the portion 240 is made up of three pieces 242, 244a and 244b.

In particular, in the embodiment considered, the piece 242 comprises a first part 246 with a substantially rectangular shape and two portions 248a and 248b with a rectangular shape that extend from the bottom side of the portion 246. In particular, the aforesaid portions 248a and 248b are to cover the legs of the child.

In the embodiment considered, the pieces 244a and 244b represent lateral portions of the covering and can be connected to the piece 242, for example, via seams along lines that are designated in the drawings respectively by the numbers 4a and 4b. For instance, in the embodiment considered, the aforesaid pieces 244a and 244b are substantially P-shaped.

Consequently, thanks to the aforesaid type of assembly, the covering portion 240 is substantially shaped like a half-shell.

In the embodiment considered, the covering portion 240 is fixed to the portion 220 in the area of the legs. For instance, in one embodiment the portion 248a is fixed to the portion 223a and the portion 248b is fixed to the portion 223b. In particular, in one embodiment, the portion 248a is fixed to the portion 223a via a further rectangular piece 260a that is illustrated in Figure 7, for example, through two seams along respective lines that are designated in Figures 5, 6 and 7 by the numbers 3a and 5a. In a similar way, also the portion 248b may be fixed to the portion 223b via a further rectangular piece 260b, for example, through two seams along respective lines that are designated in Figures 5, 6, and 7 by the numbers 3b and 5b.

Consequently, when the covering portion 240 is in the closed position, substantially two tubes for the legs of the child are formed by means of the portions 228a/b, 223a/b, 260a/b, 248a/b and 244a/b.

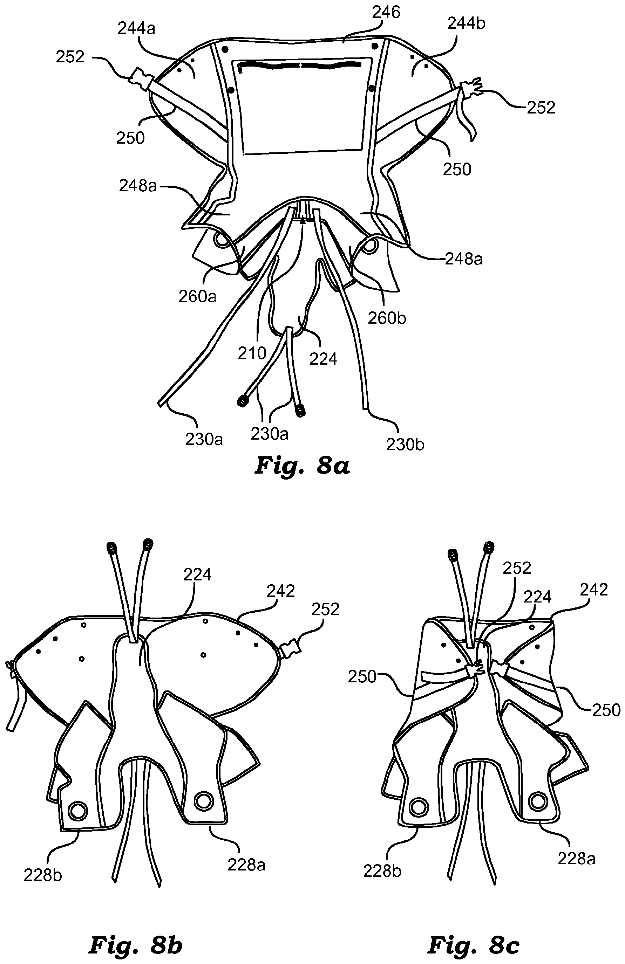

Figures 8a to 8c are different views of the entire blanket 200, which show in particular that this type of mounting makes it possible to leave the opening 210 between the legs for the passage of the buckle 108 of the child seat or of the hook 106 of the safety belts, in the case where the closing mechanism is of a quick-release type.

Consequently, in the embodiments described previously the blanket 200 comprises:
- a base portion 220 configured for following substantially the shape of the child seat 102, where the base portion 220 comprises at least:
   a) a first portion 222 that is configured for being rested on the sitting surface of the child seat 102; and
   b) a second portion 224 connected to the portion 222, wherein the portion 224 is configured for being rested against the backrest of the child seat 102, and wherein the portion 224 leaves the areas 112 for fixing the safety belts 104 free; and
- a covering portion 240, which is fixed to the base portion 220 and is movable from a closed position into an open position.

In one embodiment, both the base portion 220 and the covering portion 240 comprise rectangular portions 223a, 223b, 248a and 248b (and possibly the portions 228a/228b and/or the bottom areas of the portions 244a/244b) for the legs of the child.

In this case, the covering portion 240 can be connected to the base portion 220 by connecting the respective rectangular portions 223a/223b of the base portion 220 to the rectangular portions 248a/248b of the covering portion 240, for example by means of the pieces 260a and 260b.

In various embodiments, the blanket 200 comprises fastening means 230a, 230b and 232 that are configured for fixing the base portion 220 to the child seat 102. For instance, in the embodiment considered, the aforesaid fastening means comprise at least one first strap 230a fixed to the terminal part of the portion 224 and at least one second strap 230b fixed to the portion 220, preferably in the area of connection of the rectangular portions 223a and 223b to the portion 222.

In one embodiment, in order to obtain more effective fastening of the base portion 220 to the child seat 102, the rear side of the portion 222 and/or of the portion 224 can present a Velcro adhesive, the female part of which is preferably attached to the child seat 102.

In various embodiments, the base portion 220 also comprises lateral elements 228a and 228b configured for resting against possible armrests of the child seat 102. In particular, in the embodiment considered, also the aforesaid lateral elements 228a and 228b comprise elongated portions for the legs of the child. In general, also these lateral elements 228/228b may comprise a Velcro adhesive in the area of the armrests of the child seat 102.

Preferably, the covering portion 240, i.e., the front part of the blanket 200, is wider than the base portion 220; namely, the covering portion 240 is wider than the width of the child seat 102. In this way, when the blanket 200 is closed, the lateral portions of the covering 240 (for example, the portions 244a and 244b illustrated in Figure 6) project laterally from the child seat 102.

In one embodiment, the blanket comprises fastening means that allow the covering portion 240 to be kept in the closed position, for example by fastening the covering portion 240 to the child seat 102. For instance, as illustrated in Figures 8a to 8c, these fastening means may comprise two straps 250, which can be fixed to the covering portions 240, for example to the portion 242 and/or to the lateral portions 244a and 244b. Consequently, in order to keep the blanket 200 in the closed position, the aforesaid straps 250 can be connected behind the backrest of the child seat 102, for example via a quick-release buckle 252.

Consequently, in one embodiment, the blanket 200 is fixed to the child seat 102 through the following steps:
- the blanket 200 is positioned in such a way that the rear part 224 inserts in the space left free by the safety belts 104 of the backrest of the child seat 102 by passing the straps 230a beyond the backrest of the child seat 102;
- the front part of the blanket 200, i.e., the portion 240, is rested on the saddle of the bicycle 100 and the slot 210 is positioned for leaving engagement of the safety belts 104 of the child seat 102 free;
- the legs of the blanket 200 are positioned along the leg rests of the child seat 102; and
- the straps 230b present externally in the vicinity of the slot 210 and/or at the height of the crutch under the child seat 102 of the bicycle are brought towards the rear part of the child seat 102 and engaged with the straps 230a that descend from the top part of the seat 102.

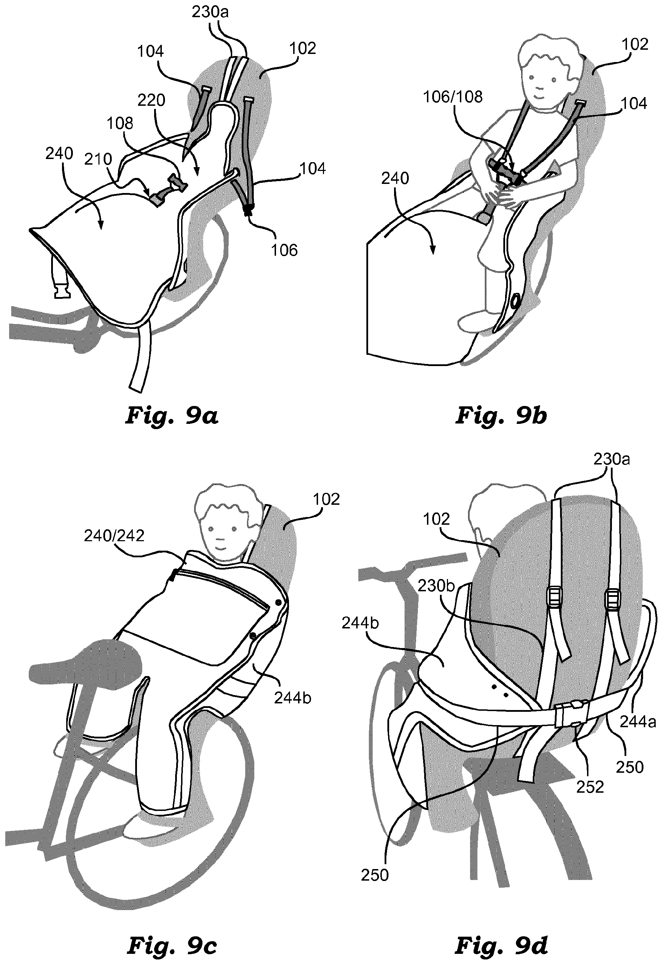

Use of the blanket 200 will now be described with reference to Figures 9a-9d.

Once the blanket 200 is in the right position with the safety belts 104 free and the slot 210 in position (see Figure 9a), the child is seated on the bicycle child seat 102 and the safety belts 104 of the child seat of the bicycle are closed (see Figure 9b). Next, the blanket 200 is closed substantially like a shell by turning over the front part 240 on the seated child (see Figure 9c). Finally, using the lateral straps 250 at the margins of the front part 240 and possibly clicking the buckle 252 closed, the blanket 200 is closed behind the backrest of the child seat 102 of the bicycle. Consequently, by adjusting the strap 250 comfort of the child is guaranteed.

In general, the blanket 200 should be mounted in such a way that the head of the child and in particular the mouth and nose remain uncovered.

In one embodiment, to enable use of the blanket with children of different heights and/or for a number of winter seasons, the blanket 200 comprises means for adjusting the height of the covering portion 240.

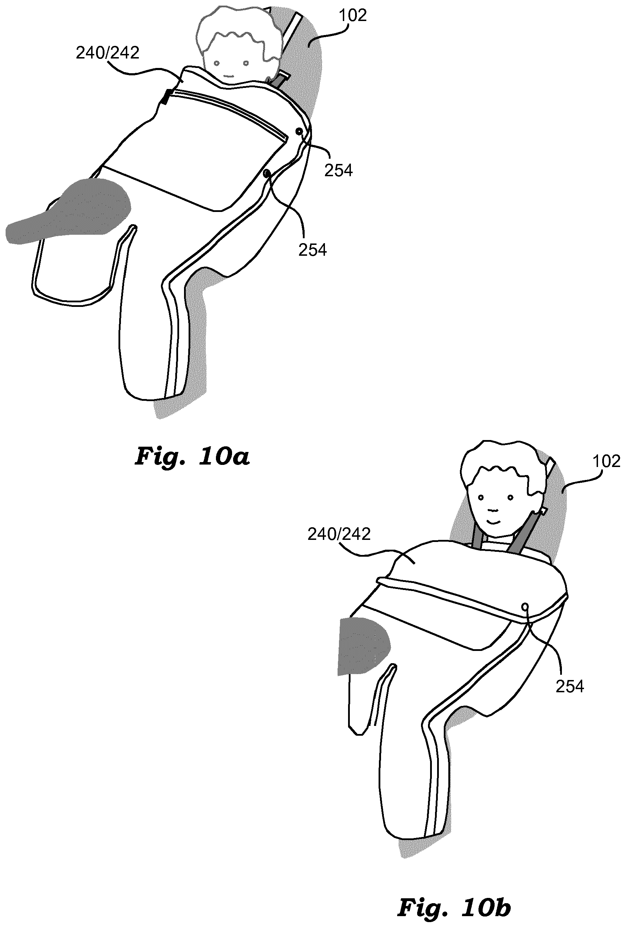

For instance, Figures 10a and 10b show an embodiment where the covering portion 240 comprises on the outer side a plurality of buttons 254, preferably press-studs. Consequently, in the case where the height has to be reduced (see Figure 10a), the top portion of the covering portion 240 can be folded in the front part and fixed thanks to the press-studs present (see Figure 10b).

Instead, to release the child it is sufficient to uncouple the quick-release buckle 252 on the back of the backrest of the child seat 102 and open the blanket by turning over the covering portion 240 towards the front part of the bicycle on the saddle of the bicycle.

In one embodiment, the blanket 200 further comprises a covering for protection against rain.

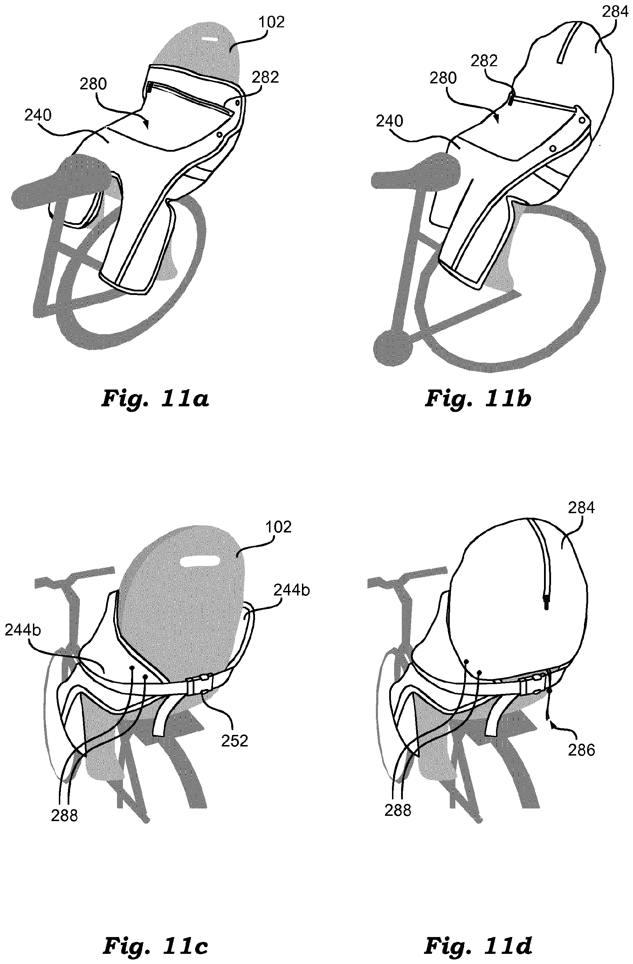

In particular, as illustrated, for example, in Figure 11a, the covering portion 240 may comprise a pocket 280 that is accessible, for instance, via a zip 282.

In one embodiment, the aforesaid pocket 280 contains a bag or covering/rain poncho 284, which is preferably fixed inside the pocket 280 (see, for example, Figure 11b).

In particular, in the embodiment considered, the aforesaid covering 284 is configured for covering the top portion of the backrest of the child seat 102 (see Figure 11b). Consequently, in order to protect the inside of the blanket 200 and the portion of child seat 102 that would remain exposed to the rain it is sufficient to close the blanket 200 and pass the covering 284 beyond the backrest of the child seat 102.

Preferably, the covering 284 also comprises fastening means that allow the covering 284 to be held in position, for example by fastening the covering 284 to the child seat 102. For instance, in the embodiment considered, the covering 284 comprises a drawstring 286 (see Figure 11d), and, by pulling the drawstring 286, for example in the rear part of the covering 286, the covering 284 narrows and is fastened.

As an alternative or in addition, the covering 284 may also comprise buttons 288, such as for example press-studs, which enable further fixing of the covering, for example, to the lateral portions 244a and 244b of the blanket 200 (see Figures 11c and 11d).

Consequently, in the embodiment considered, the covering 284 guarantees that the sitting surface of the child seat 102 and the inside of the blanket 200 do not get wet with the rain.

In one embodiment, in order to discourage the theft of the blanket 200, the latter comprises at least one eyelet or opening. Preferably, the eyelet is reinforced with a ring, such as for example a ring made of a metal material.

Consequently, the blanket can be left on the bicycle, without removing it once the user reaches his or her destination.

Preferably, the eyelet is provided in the area of the legs, for example in the portion 228 or in the portion 260. Furthermore, preferably two eyelets are provided that are arranged in corresponding positions on both sides of the blanket 200.

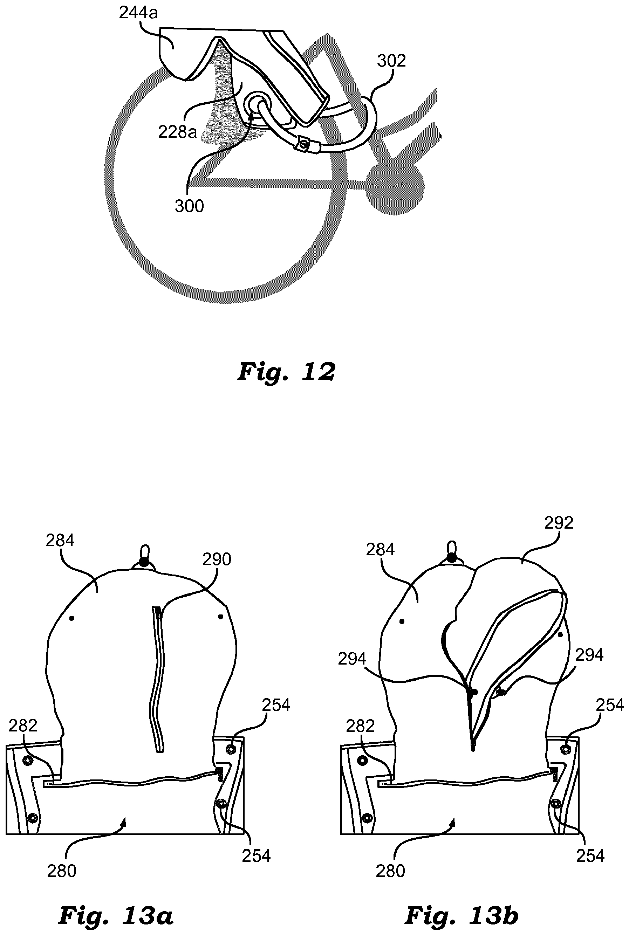

For instance, illustrated in Figure 12 is an embodiment, where at least one eyelet 300 is provided in the portion 228a and/or 228b. For example, in one embodiment, an eyelet 300 is provided in the portion 228a and an eyelet 300 is provided in the portion 228b. In this way, the blanket 200 can be fixed by means of the chain and/or the safety hook 302 with which the bicycle 100 is secured to the bicycle rack, post, or gate.

Finally, Figures 13a to 13c show an embodiment in which the covering 284 can be converted into a rain hood for the child.

In the embodiment considered, the covering comprises a zip 290 (see Figure 13a). By opening the zip 290 a hood 292 can be taken out that is fixed inside the areas of fixing of the zip 290 (see Figure 13b).

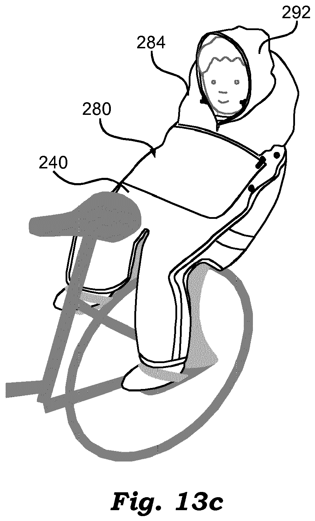

Consequently, as illustrated in Figure 13c, by passing the covering/poncho 284 over the head of the child and the backrest of the child seat 102, the hood 292 is positioned exactly on the head of the child. Preferably, the opening of the hood 292 can be adjusted with elastic chords 23 and/or a drawstring 294.

Hence, in the embodiments described, the blanket 200 comprises a front pocket 280 that contains a covering/poncho 284, which can be taken out and adjusted for protection and/or for keeping the blanket 200 in position when the child is not present. Furthermore, in various embodiments, present on the covering/poncho 280 is a zip 290 by opening which it is possible to take out a hood 292 for protection of the head of the child in the event of rain. Preferably, the hood 292 is wide enough to cover also a possible helmet.

In general, the blanket 200 can be made of any fabric. However, it is preferable for the blanket 200 to be made of an abrasion-resistant and impermeable fabric that enables protection also against rain and wind. Furthermore, preferably a padding that improves thermal protection is provided at least in the base portion 220 and in the covering portion 240.

Consequently, the blankets 200 for bicycle child seats described herein present numerous advantages. For instance, in some embodiments:
- the blanket 200 is adaptable to different ranges of child seats for bicycles in so far as it does not interfere with the various types of safety belts 104 and systems of engagement 106/108 of the child seat 102;
- the blanket 200 may be used for a number of winter seasons given that it is provided with straps and press-studs that allow adjustment according to the size of the child;
- the shell-like opening-closing of the blanket 200 with a simple buckle 252 on the back of the backrest of the child seat 102 enables the child to be slipped in and out easily and rapidly;

- the front pocket 280 could also be used for putting objects that may be useful during the ride;
- a covering/poncho 282 can be taken out of the pocket 280, which enables the child seat 102 to be protected when the child is not occupying it;
- by opening a further zip 290 present on the covering/poncho 282 it is possible to take out a hood 292 for protection of the child in the event of rain; and
- the blanket 200 comprises at least one eyelet 300 positioned preferably laterally on the legs, where the aforesaid eyelet 300 allows for passage of the bicycle chain lock or U-lock, thus reducing the danger of theft.

Consequently, the blanket 200 does not need to be removed each time, but can also remain always on the child seat 102. In fact, thanks to the eyelet 300 the blanket 200 can be fixed together with the bicycle and, thanks to the covering 284, the inside of the blanket 200 and the child seat 102 can be protected from rain.

Of course, without prejudice to the principle of the invention, the details of construction and the embodiments may vary widely with respect to what has been described and illustrated herein purely by way of example, without thereby departing from the scope of the present invention, as defined by the ensuing claims.

## Claims

1. A blanket (200) for a bicycle (100) child seat (102), said child seat (102) comprising a sitting surface and a backrest, wherein said blanket (200) comprises:
- a base portion (220) comprising:
a) a first substantially trapezoidal portion (222) configured to be rested on the sitting surface of said child seat (102); and
b) a second portion (224) formed at the top part of said first portion (222) and configured to be rested against the backrest of said child seat (102);
- fastening means (230a, 230b, 232), configured to fix said base portion (220) to said child seat (102);
**characterised by** that said blanket (200) further comprises:
- a covering portion (240) movable between an open position, in which a child can be seated on said base portion (220), and a closed position, in which said covering portion (240) covers said child at least partially, wherein said covering portion (240) comprises a first part (246) with substantially rectangular shape; and
wherein said base portion (220) comprises a third portion (223a) and a fourth portion (223b), which have substantially rectangular shapes and extend from the bottom part of said first portion (222), wherein said covering portion (240) comprises a second part (248a) and a third part (248b), which have substantially rectangular shapes and extend from the bottom side of said first part (246), and wherein said second part (248) is fixed to said third portion (223a) and said third part (248b) is fixed to said fourth portion (223b).

2. The blanket for a bicycle child seat (102) according to Claim 1, wherein said blanket (200) comprises portions (223a, 223b, 228a, 228b, 260a, 260b, 248a, 248b, 244a, 244b), configured for forming two tubes when said covering portion (240) is in said closed position.

3. The blanket for a bicycle child seat (102) according to Claim 1 or Claim 2, wherein said second portion (224) is tongue-shaped.

4. The blanket for a bicycle child seat (102) according to any one of the preceding claims, wherein said child seat (102) comprises at least one safety belt (104) that is fixed (112) to the backrest of said child seat (102), and fastening means (108, 110) for fixing said at least one safety belt (104) to the sitting surface of said child seat (102), and wherein:
- said second portion (224) is configured to leave the areas of fixing (112) of said at least one safety belt (104) to the backrest of said child seat (102) free; and/or
- said first portion (224) comprises a slot (210) in a position corresponding to said fastening means (108, 110) for fixing said at least one safety belt (104) to the sitting surface of said child seat (102).

5. The blanket for a bicycle child seat (102) according to Claim 4, wherein said child seat (102) comprises two safety belts (104) that are fixed in two fixing points (112) to the backrest of said child seat (102), and wherein said second portion (224) has:
- a width that narrows in the end area in such a way that the width of the end area of said second portion (224) is smaller than the distance between said fixing points (112); and/or
- a length that is smaller than the distance between the sitting surface of said child seat (102) and said fixing points (112).

6. The blanket for a bicycle child seat (102) according to any one of the preceding claims, wherein said child seat (102) comprises armrests, and wherein said base portion (220) comprises:
c) lateral portions (228a, 228b), configured to be rested against said armrests of said child seat (102).

7. The blanket for a bicycle child seat (102) according to any one of the preceding claims, wherein said fastening means (230a, 230b, 232) for fixing said base portion (220) to said child seat (102) comprise:
- at least one first belt (230b) connected to said first portion (222);
- at least one second belt (230a) connected to said second portion (224); and
- fastening means (232), configured for connecting said at least one first belt (230b) to said at least one second belt (230a).

8. The blanket for a bicycle child seat (102) according to any one of the preceding claims, wherein said covering portion (240) has a width that is greater than the width of said base portion (220).

9. The blanket for a bicycle child seat (102) according to any one of the preceding claims, wherein said blanket (200) comprises fastening means (250, 252) for keeping said covering portion (240) in said closed position, such as, for example, two belts (250) that can be connected together (252) behind the backrest of said child seat (102).

10. The blanket for a bicycle child seat (102) according to any one of the preceding claims, wherein said blanket (200) comprises at least one between:
- means (254) for adjusting the height of said covering portion (242);
- a covering for protection against rain (284);
- a rain hood (292) for the child; and/or
- an eyelet (300) for fixing said blanket (200) to the bicycle via a safety chain or U-lock (302).

11. A method for producing a blanket (200) for a child seat (102), said child seat (102) comprising a sitting surface and a backrest, the method comprising the steps of:
- providing a base portion (220) comprising:
a) a first substantially trapezoidal portion (222) configured to be rested on the sitting surface of said child seat (102); and
b) a second portion (224) formed at the top part of said first portion (222) and configured to be rested against the backrest of said child seat (102); and
c) a third portion (223a) and a fourth portion (223b), which have substantially rectangular shapes and extend from the bottom part of said first portion (222);
- providing fastening means (230a, 230b, 232), configured to fix said base portion (220) to said child seat (102)
**characterised by** the method further comprising the steps of:
- providing a covering portion (240) movable between an open position in which a child can be seated on said base portion (220) and a closed position in which said covering portion (240) covers said child at least partially, wherein said covering portion (240) comprises:
a) a first part (246) with substantially rectangular shape; and
b) a second part (248a) and a third part (248b), which have substantially rectangular shapes and extend from the bottom side of said first part (246); and
- fixing said second part (248) to said third portion (223a) and said third part (248b) to said fourth portion (223b).

## Patentansprüche

1. Decke (200) für einen Kindersitz (102) eines Fahrrades (100), wobei der Kindersitz (102) eine Sitzfläche und eine Rückenlehne umfasst, und wobei die Decke (200) Folgendes umfasst:
- einen Basisabschnitt (220), umfassend:
a) einen ersten im Wesentlichen trapezförmigen Abschnitt (222), der so ausgelegt ist, dass er auf der Sitzfläche des Kindersitzes (102) aufliegt; und
b) einen zweiten Abschnitt (224), der am oberen Teil des ersten Abschnitts (222) ausgebildet und so ausgelegt ist, dass er an der Rückenlehne des Kindersitzes (102) anliegt;
- Befestigungsmittel (230a, 230b, 232), die so ausgelegt sind, dass sie den Basisabschnitt (220) am Kindersitz (102) befestigen;
**dadurch gekennzeichnet, dass** die Decke (200) ferner umfasst:
- einen Abdeckabschnitt (240), der zwischen einer offenen Position, in der ein Kind auf dem Basisabschnitt (220) sitzen kann, und einer geschlossenen Position, in der der Abdeckabschnitt (240) das Kind zumindest teilweise bedeckt, bewegt werden kann, wobei der Abdeckabschnitt (240) einen ersten Teil (246) mit im Wesentlichen rechteckiger Form umfasst; und
wobei der Basisabschnitt (220) einen dritten Abschnitt (223a) und einen vierten Abschnitt (223b) umfasst, die im Wesentlichen rechteckige Formen aufweisen und sich vom unteren Teil des ersten Abschnitts (222) erstrecken, wobei der Abdeckabschnitt (240) einen zweiten Teil (248a) und einen dritten Teil (248b) umfasst, die im Wesentlichen rechteckige Formen aufweisen und sich von der Unterseite des ersten Teils (246) erstrecken, und wobei der zweite Teil (248) am dritten Abschnitt (223a) befestigt ist und der dritte Teil (248b) am vierten Abschnitt (223b) befestigt ist.

2. Decke für einen Fahrradkindersitz (102) nach Anspruch 1, wobei die Decke (200) Abschnitte (223a, 223b, 228a, 228b, 260a, 260b, 248a, 248b, 244a, 244b) aufweist, die so ausgebildet sind, dass sie zwei Rohre bilden, wenn sich der Abdeckabschnitt (240) in der geschlossenen Position befindet.

3. Decke für einen Fahrradkindersitz (102) nach Anspruch 1 oder Anspruch 2, wobei der zweite Abschnitt (224) zungenförmig ist.

4. Decke für einen Fahrradkindersitz (102) nach einem der vorhergehenden Ansprüche, wobei der Kindersitz (102) mindestens einen an der Rückenlehne des Kindersitzes (102) befestigten (112) Sicherheitsgurt (104) sowie Befestigungsmittel (108, 110) zum Befestigen des mindestens einen Sicherheitsgurts (104) an der Sitzfläche des Kindersitzes (102) umfasst, und wobei:
- der zweite Abschnitt (224) so ausgelegt ist, dass die Befestigungsbereiche (112) des mindestens einen Sicherheitsgurts (104) an der Rückenlehne des Kindersitzes (102) frei gelassen werden; und/oder
- der erste Abschnitt (224) einen Schlitz (210) in einer Position entsprechend den Befestigungsmitteln (108, 110) aufweist, um den mindestens einen Sicherheitsgurt (104) an der Sitzfläche des Kindersitzes (102) zu befestigen.

5. Decke für einen Fahrradkindersitz (102) nach Anspruch 4, wobei der Kindersitz (102) zwei Sicherheitsgurte (104) umfasst, die an zwei Befestigungspunkten (112) an der Rückenlehne des Kindersitzes (102) befestigt sind, und wobei der zweite Abschnitt (224) Folgendes aufweist:
- eine Breite, die sich im Endbereich so verengt, dass die Breite des Endbereichs des zweiten Abschnitts (224) kleiner als der Abstand zwischen den Befestigungspunkten (112) ist; und/oder
- eine Länge, die kleiner als der Abstand zwischen der Sitzfläche des Kindersitzes (102) und den Befestigungspunkten (112) ist.

6. Decke für einen Fahrradkindersitz (102) nach einem der vorhergehenden Ansprüche, wobei der Kindersitz (102) Armlehnen umfasst, und wobei der Basisabschnitt (220) Folgendes umfasst:
c) seitliche Abschnitte (228a, 228b), die so ausgelegt sind, dass sie an den Armlehnen des Kindersitzes (102) anliegen.

7. Decke für einen Fahrradkindersitz (102) nach einem der vorhergehenden Ansprüche, wobei die Befestigungsmittel (230a, 230b, 232) zum Befestigen des Basisabschnitts (220) an dem Kindersitz (102) Folgendes umfassen:
- mindestens einen ersten Gurt (230b), der mit dem ersten Abschnitt (222) verbunden ist;
- mindestens einen zweiten Gurt (230a), der mit dem zweiten Abschnitt (224) verbunden ist; und
- Befestigungsmittel (232), die so ausgelegt sind, dass sie den mindestens einen ersten Gurt (230b) mit dem mindestens einen zweiten Gurt (230a) verbinden.

8. Decke für einen Fahrradkindersitz (102) nach einem der vorhergehenden Ansprüche, wobei der Abdeckabschnitt (240) eine Breite aufweist, die größer als die Breite des Basisabschnitts (220) ist.

9. Decke für einen Fahrradkindersitz (102) nach einem der vorhergehenden Ansprüche, wobei die Decke (200) Befestigungsmittel (250, 252) zum Halten des Abdeckabschnitts (240) in der geschlossenen Position umfasst, wie beispielsweise zwei Gurte (250), die hinter der Rückenlehne des Kindersitzes (102) miteinander verbunden (252) werden können.

10. Decke für einen Fahrradkindersitz (102) nach einem der vorhergehenden Ansprüche, wobei die Decke (200) mindestens eines der Folgenden umfasst:
- Mittel (254) zum Einstellen der Höhe des Abdeckabschnitts (242);
- eine Abdeckung zum Schutz vor Regen (284);
- eine Regenhaube (292) für das Kind; und/oder
- eine Öse (300) zum Befestigen der Decke (200) am Fahrrad über eine Sicherheitskette oder ein Bügelschloss (302).

11. Verfahren zum Herstellen einer Decke (200) für einen Kindersitz (102), wobei der Kindersitz (102) eine Sitzfläche und eine Rückenlehne umfasst, wobei das Verfahren die folgenden Schritte umfasst:
- Bereitstellen eines Basisabschnitts (220), umfassend:
a) einen ersten im Wesentlichen trapezförmigen Abschnitt (222), der so ausgelegt ist, dass er auf der Sitzfläche des Kindersitzes (102) aufliegt; und
b) einen zweiten Abschnitt (224), der am oberen Teil des ersten Abschnitts (222) ausgebildet und so ausgelegt ist, dass er an der Rückenlehne des Kindersitzes (102) anliegt; und
c) einen dritten Abschnitt (223a) und einen vierten Abschnitt (223b), die im Wesentlichen rechteckige Formen aufweisen und sich vom Unterteil des ersten Abschnitts (222) erstrecken;
- Bereitstellen von Befestigungsmitteln (230a, 230b, 232), die so ausgelegt sind, dass sie den Basisabschnitt (220) am Kindersitz (102) befestigen;
**dadurch gekennzeichnet, dass** das Verfahren ferner die folgenden Schritte umfasst:
- Bereitstellen eines Abdeckabschnitts (240), der zwischen einer offenen Position, in der ein Kind auf dem Basisabschnitt (220) sitzen kann, und einer geschlossenen Position, in der der Abdeckabschnitt (240) das Kind zumindest teilweise bedeckt, bewegt werden kann, wobei der Abdeckabschnitt (240) Folgendes umfasst:
a) einen ersten Teil (246) mit einer im Wesentlichen rechteckigen Form; und
b) einen zweiten Teil (248a) und einen dritten Teil (248b), die im Wesentlichen rechteckige Formen aufweisen und sich von der Unterseite des ersten Teils (246) erstrecken; und
- Befestigen des zweiten Teils (248) an dem dritten Abschnitt (223a) und des dritten Teils (248b) an dem vierten Abschnitt (223b).

## Revendications

1. Couverture (200) pour un siège d'enfant (102) de bicyclette (100), ledit siège d'enfant (102) comprenant une surface d'assise et un dossier, dans laquelle ladite couverture (200) comprend :
une partie de base (220) comprenant :
a) une première partie sensiblement trapézoïdale (222) configurée pour être posée sur la surface d'assise dudit siège d'enfant (102) ; et
b) une deuxième partie (224) formée au niveau de la partie supérieure de ladite première partie (222) et configurée pour être posée contre le dossier dudit siège d'enfant (102) ;
des moyens de fixation (230a, 230b, 232) configurés pour fixer ladite partie de base (220) sur ledit siège d'enfant (102) ;
**caractérisé par** ladite couverture (200) qui comprend en outre :
une partie de recouvrement (240) mobile entre une position ouverte dans laquelle un enfant peut être assis sur ladite partie de base (220), et une position fermée dans laquelle ladite partie de recouvrement (240) couvre ledit enfant au moins partiellement, dans laquelle ladite partie de recouvrement (240) comprend une première partie (246) avec une forme sensiblement rectangulaire ; et
dans laquelle ladite partie de base (220) comprend une troisième partie (223a) et une quatrième partie (223b), qui ont des formes sensiblement rectangulaires et s'étendent à partir de la partie inférieure de ladite première partie (222), dans laquelle ladite partie de recouvrement (240) comprend une deuxième partie (248a) et une troisième partie (248b) qui ont des formes sensiblement rectangulaires et s'étendent à partir du côté inférieur de ladite première partie (246), et dans laquelle ladite deuxième partie (248) est fixée sur ladite troisième partie (223a) et ladite troisième partie (248b) est fixée sur ladite quatrième partie (223b).

2. Couverture pour un siège d'enfant (102) de bicyclette selon la revendication 1, dans laquelle ladite couverture (200) comprend des parties (223a, 223b, 228a, 228b, 260a, 260b, 248a, 248b, 244a, 244b), configurées pour former deux tubes lorsque ladite partie de recouvrement (240) est dans ladite position fermée.

3. Couverture pour un siège d'enfant (102) de bicyclette selon la revendication 1 ou la revendication 2, dans laquelle ladite deuxième partie (224) est en forme de langue.

4. Couverture pour un siège d'enfant (102) de bicyclette selon l'une quelconque des revendications précédentes, dans laquelle ledit siège d'enfant (102) comprend au moins une ceinture de sécurité (104) qui est fixée (112) sur le dossier dudit siège d'enfant (102), et des moyens de fixation (108, 110) pour fixer ladite au moins une ceinture de sécurité (104) sur la surface d'assise dudit siège d'enfant (102), et dans laquelle :
ladite deuxième partie (224) est configurée pour laisser les zones de fixation (112) de ladite au moins une ceinture de sécurité (104) sur le dossier dudit siège d'enfant (102) libres ; et/ou
ladite première partie (224) comprend une fente (210) dans une position correspondant auxdits moyens de fixation (108, 110) pour fixer ladite au moins une ceinture de sécurité (104) sur la surface d'assise dudit siège d'enfant (102).

5. Couverture pour un siège d'enfant (102) de bicyclette selon la revendication 4, dans laquelle ledit siège d'enfant (102) comprend deux ceintures de sécurité (104) qui sont fixées dans deux points de fixation (112) sur le dossier dudit siège d'enfant (102), et dans laquelle ladite deuxième partie (224) a :
une largeur qui se rétrécit dans la zone d'extrémité de sorte que la largeur de la zone d'extrémité de ladite deuxième partie (224) est inférieure à la distance entre lesdits points de fixation (112) ; et/ou
une longueur qui est inférieure à la distance entre la surface d'assise dudit siège d'enfant (102) et lesdits points de fixation (112).

6. Couverture pour un siège d'enfant (102) de bicyclette selon l'une quelconque des revendications précédentes, dans laquelle ledit siège d'enfant (102) comprend des accoudoirs, et dans laquelle ladite partie de base (220) comprend :
c) des parties latérales (228a, 228b), configurées pour être posées contre les accoudoirs dudit siège d'enfant (102).

7. Couverture pour un siège d'enfant (102) de bicyclette selon l'une quelconque des revendications précédentes, dans laquelle lesdits moyens de fixation (230a, 230b, 232) pour fixer ladite partie de base (220) sur ledit siège d'enfant (102) comprennent :
au moins une première ceinture (230b) raccordée à ladite première partie (222) ;
au moins une seconde ceinture (230a) raccordée à ladite deuxième partie (224) ; et
des moyens de fixation (232), configurés pour raccorder ladite au moins une première ceinture (230b) à ladite au moins une seconde ceinture (230a).

8. Couverture pour un siège d'enfant (102) de bicyclette selon l'une quelconque des revendications précédentes, dans laquelle ladite partie de recouvrement (240) a une largeur qui est supérieure à la largeur de ladite partie de base (220).

9. Couverture pour un siège d'enfant (102) de bicyclette selon l'une quelconque des revendications précédentes, dans laquelle ladite couverture (200) comprend des moyens de fixation (250, 252) pour maintenir ladite partie de recouvrement (240) dans ladite position fermée, telles que, par exemple, les deux ceintures (250) qui sont raccordées ensemble (252) derrière le dossier dudit siège d'enfant (102).

10. Couverture pour un siège d'enfant (102) de bicyclette selon l'une quelconque des revendications précédentes, dans laquelle ladite couverture (200) comprend au moins l'un parmi :
des moyens (254) pour ajuster la hauteur de ladite partie de recouvrement (242) ;
un recouvrement pour la protection contre la pluie (284) ;
une capuche de pluie (292) pour l'enfant ; et/ou
un oeillet (300) pour fixer ladite couverture (200) à la bicyclette via une chaîne de sécurité ou un cadenas en U (302).

11. Procédé pour produire une couverture (200) pour un siège d'enfant (102), ledit siège d'enfant (102) comprenant une surface d'assise et un dossier, le procédé comprenant les étapes suivantes :
prévoir une partie de base (220) comprenant :
a) une première partie sensiblement trapézoïdale (222) configurée pour être posée sur la surface d'assise dudit siège d'enfant (102) ; et
b) une deuxième partie (224) formée au niveau de la partie supérieure de ladite première partie (222) et configurée pour être posée contre le dossier dudit siège d'enfant (102) ; et
c) une troisième partie (223a) et une quatrième partie (223b), qui ont des formes sensiblement rectangulaires et s'étendent à partir de la partie inférieure de ladite première partie (222) ;
prévoir des moyens de fixation (230a, 230b, 232) configurés pour fixer ladite partie de base (220) sur ledit siège d'enfant (102), **caractérisé par** le procédé qui comprend en outre les étapes suivantes :
prévoir une partie de recouvrement (240) mobile entre une position ouverte dans laquelle un enfant peut être assis sur ladite partie de base (220) et une position fermée dans laquelle ladite partie de recouvrement (240) recouvre ledit enfant au moins partiellement, dans lequel ladite partie de recouvrement (240) comprend :
a) une première partie (246) avec une forme sensiblement rectangulaire ; et
b) une deuxième partie (248a) et une troisième partie (248b) qui ont des formes sensiblement rectangulaires et s'étendent à partir du côté inférieur de ladite première partie (246) ; et
fixer ladite deuxième partie (248) sur ladite troisième partie (223a) et ladite troisième partie (248b) sur ladite quatrième partie (223b).
